# EUROPÄISCHE PATENTSCHRIFT

(11) **EP 1 469 055 B1**
(45) Veröffentlichungstag und Bekanntmachung des Hinweises auf die Patenterteilung: **31.05.2006**
(21) Anmeldenummer: 04006285.3
(22) Anmeldetag: 17.03.2004
(51) Int. Cl.: C09J 175/08, C08L 75/08

(54) **Haftklebstoff aus Polyurethan für empfindliche Oberflächen**
Pressure-sensitive polyurethane adhesive for sensitive surfaces
Adhésif sensible à la pression à base de polyurethanne pour des surfaces sensibles

(30) Priorität: 16.04.2003 DE 10317791
(43) Veröffentlichungstag der Anmeldung: 20.10.2004
(73) Patentinhaber: tesa AG, 20253 Hamburg (DE)
(72) Erfinder: Schümann, Uwe, Dr., 25421 Pinneberg (DE); Weiland, Kirstin, 21035 Hamburg (DE); Lühmann, Bernd, Dr., 22844 Norderstedt (DE); Sunarto, Sianty, Singapore 270002 (SG); Hesse, Philippe, 21244 Buchholz (DE); Böhmer, Carsten, 22527 Hamburg (DE)

(56) Entgegenhaltungen:
- EP-A- 0 568 425
- DE-A- 2 239 095
- US-A- 3 813 380

## Beschreibung

Die Erfindung betrifft einen Haftklebstoff auf Basis eines chemisch vernetzten Polyurethans, der auf polaren Kunststoff- und glatten Metalloberflächen sowie auf Glas gut, auf Papier, Pappe oder menschlicher Haut im wesentlichen nicht oder zumindest nur schwach haftet, der insbesondere leicht wiederablösbar ist, ohne die Oberflächen beim Ablösen zu schädigen, Rückstände oder fettig aussehende Flecken zu hinterlassen, der weiterhin mehrfach verwendbar, abwaschbar und lichtstabil ist, ein Reaktivbeschichtungsverfahren zu dessen lösemittel- und wasserfreier kontinuierlicher Herstellung sowie die Verwendung des Haftklebstoffs zur Herstellung von selbstklebenden Artikeln, wie zum Beispiel Klebebändern, Klebstreifen, Klebfolien oder Klebepads.

Haftklebrige beziehungsweise eigenklebrige Eigenschaften sind für Polyurethane nicht typisch. Obwohl Polyurethane in der Rangliste der Kunststoffe hinsichtlich der produzierten Mengen auf Platz fünf stehen, spielen Haftklebstoffe aus diesem Material wirtschaftlich nur eine sehr untergeordnete Rolle.

Dennoch sind Haftklebstoffe aus Polyurethan seit langem bekannt und werden in vielfältiger Weise beschrieben.

Der Effekt der Haftklebrigkeit kann durch den Zusatz von Klebrigmacher-Harzen und/oder Weichmachern zum Polyurethan-Grundpolymer erzielt werden. Diese Methode wird zum Beispiel in US 3,437,622 A (Dahl et al., Continental Tapes), US 3,718,712 A (Tushaus et al., 3M), US 4,087,392 A (Hartmann et al., BASF), DE 19 04 102 A (Hagenweiler, BASF) und JP 2000 256 639 (Toyo) beschrieben.

Derartige Haftklebstoffe haben in der Regel den Nachteil, nicht selektiv nur auf bestimmten Oberflächen zu haften. Sie ziehen außerdem nach längerer Verklebungsdauer meist stark auf die Oberflächen auf und sind somit oft nicht wiederablösbar.
Unter dem Begriff "Aufziehen" versteht der Fachmann die Erhöhung der Verklebungsfestigkeit bei Lagerung des Klebverbundes.
Weiterhin kann das Klebrigmacherharz in die verklebten Oberflächen migrieren und dort fettig aussehende Flecken hinterlassen.

Ein starkes Aufziehen auf viele Oberflächen, eine dadurch bedingte schwierige Wiederablösbarkeit sowie die Neigung, auf vielen Oberflächen fettig aussehende Flecken zu hinterlassen, ist insbesondere auch bei denjenigen Haftklebstoffen zu beobachten, bei denen die Haftklebrigkeit durch eine Untervernetzung, also einen Unterschuss an Isocyanatgruppen gegenüber den mit den lsocyanatgruppen reagierenden Gruppen, wie zum Beispiel Hydroxyl- oder Aminogruppen erzielt wird.
Nach dem Prinzip der Untervernetzung konzipierte Haftklebstoffe sind zum Beispiel in US 5,157,101 A (Orr, Norwood), DE 24 35 218 A (Adsley et al., Adhesive Tapes), JP 59 227 922 (Sanyo), US 3,930,102 A (Szonn et al., Beiersdorf), US 5,714,543 A (Kydonieus et al., Bristol Myers Squibb), EP 0 597 636 A1 (Kydonieus et al., Squibb) und US 5,591,820 A (Kydonieus et al., Squibb) beschrieben.

ln eine sehr ähnliche Kategorie mit analogen Schwächen fallen Polyurethan-Haftklebstoffe, die Monoole enthalten. Derartige Polyurethane sind ebenfalls untervernetzt und enthalten somit höhere Anteile an migrierfähigen Polyurethan-Einheiten mit geringem Molekulargewicht.
Polyurethan-Haftklebstoffe auf dieser Basis sind zum Beispiel aus EP 0 882 749 A1 (lkeda et al., Nitto), US 5,227,409 A (Mobley et al., Dow) und US 5,102,714 A (Mobley et al., Dow) bekannt.

In einem weiteren Typus von Haftklebstoffen aus Polyurethan werden Hydroxylgruppen tragende doppelbindungshaltige Polyolkomponenten eingesetzt. Polyurethan-Haftklebstoffe auf dieser Basis sind zum Beispiel in JP 02 003 476 (Tsubota et al., Shinko), WO 98/30648 A1 (Gerard et al., Shell), JP 59 230 076 (Sekisui), JP 2001 146 577 (Toyo), US 3,879,248 A (Kest), US 3,743,616 A (Kest), US 3,743,617 A (Kest), US 5,486,570 A (St. Clair, Shell) und US 3,515,773 A (Dahl et al., Continental Tapes) aufgeführt. Nachteilig ist die oxidative Empfindlichkeit dieser Haftklebstoffe, hervorgerufen durch die Doppelbindungen in der Polymerhauptkette. Dies führt nach einiger Zeit zu einer Verlackung oder zu einem Abstumpfen der haftklebrigen Oberfläche. Weiterhin enthalten die meisten Haftklebstoffe dieses Typus noch zusätzlich Harze, was die bereits weiter oben beschriebenen Nachteile zur Folge hat.

Ein spezieller Kohlenstoff-Kohlenstoff-Doppelbindungen enthaltender Polyurethan-Haftklebstoff, basierend auf dem Naturprodukt Rizinusöl, wird in US 3,246,049 A (Webber, Norton) beschrieben. Auch hier ist als Schwäche die oxidativen Empfindlichkeit anzusehen.

In EP 0 979 835 A (Questel et al., Elf Atochem) werden Hydroxyl-terminierte Polyalkylene als Polyol-Komponente vorgeschlagen, womit das Problem der oxidativen Empfindlichkeit gelöst wäre. Die Zusammensetzungen sind allerdings feuchtigkeitshärtend, erreichen somit eine hohe kohäsive Endfestigkeit und sind nicht mehrfach verwendbar, so dass sie für reversible Papierverklebungen ungeeignet sind. Zudem enthalten sie Klebrigmacherharze und Weichmacher, deren Nachteile bereits weiter oben beschrieben wurden.

Feuchtigkeitshärtende Polyurethan-Haftklebstoffe werden außerdem zum Beispiel auch noch in US 4,661,542 A (USM), JP 63 189 486 (Sanyo) und EP 0 196 749 A1 (von Voithenberg et al., Emhart) beschrieben.

Ein Polyurethan-Haftklebstoff auf Basis von hydrierten Polybutadienen wird in JP 01 156 386 (Uehara et al., Hitachi) beschrieben. Nachteilig ist hier die Notwendigkeit einer Elektronenstrahlvernetzung, die einen erheblichen technischen Aufwand bedeutet.

Ein Polyurethan-Haftklebstoff, der ebenfalls durch Elektronenstrahlen gehärtet werden muss, ist aus JP 63 260 977 (Uehara et al., Hitachi) bekannt. Dort werden Polyether als Polyol-Komponente eingesetzt.

In einigen Schriften werden Polyurethan enthaltende Blends oder Polyurethan-Copolymerisate mit haftklebrigen Eigenschaften beschrieben. Beispiele sind US 5,910,536 A (Kydonieus et al., Bristol Myers Squibb), US 5,714,543 A (Shah et al., Bristol Myers Squibb) und US 4,626,475 A (Barnett et al., Ashland Oil). Diese Haftklebstoffe zeichnen sich in der Regel durch einen erhöhten Tack aus und sind daher von empfindlichen Substraten nur schwer ohne Schädigung zu entfernen. lhre Haftklebrigkeit ist im Regelfall nicht selektiv auf bestimmte Oberflächen beschränkt.

Polyurethan-Haftklebstoffe mit speziellen Zusatzeigenschaften, wie zum Beispiel Flammfestigkeit oder elektrische Leitfähigkeit, werden zum Beispiel in EP 1 108 768 A1 (Wong, Tyco) oder US 4,855,077 A (Hata et al., Takiron) beschrieben.

Geschäumte Polyurethane mit haftklebrigen Eigenschaften sind ebenfalls bekannt. Beispielhaft sei die Schrift DE 24 35 217 A (Adsley et al., Adhesive Tapes) genannt, sowie die Beschreibungen hydrophiler Schäume in DE 42 33 289 A (Kenndoff et al., Beiersdorf) und WO 94/07935 A (Kenndoff et al., Beiersdorf).
Grundsätzlich haben geschäumte Polyurethane durch die Vergrößerung der Oberfläche den Nachteil einer erhöhten oxidativen Empfindlichkeit sowie einer erhöhten Lichtempfindlichkeit. In der Praxis hat sich gezeigt, dass sie auf den meisten Oberflächen stark aufziehen und entweder nur unter Schädigung abziehbar sind oder aber, insbesondere im Falle der durch Superabsorber-Zusätze hydrophil eingestellten Schäume, mit dem Untergrund in einer Weise in Wechselwirkung treten, dass es zur Fleckenbildung kommt.

Polyurethane mit haftklebrigen Eigenschaften können, wie in JP 2000 073 040 (Toyo) und JP 2000 256 638 (Toyo) aufgezeigt wird, auch durch Verwendung von sowohl Polyethern als auch Polyestern sowie zweier unterschiedlicher Katalysatoren innerhalb einer Polyolkomponenten-Rezeptur erhalten werden. Nachteilig daran ist vor allem die durch die Rezepturen bedingte Erhöhung an Komplexität in der Herstellung.

In JP 2000 328 034 (Toyo), US 3,761,307 A (Dahl) und US 3,925,283 A (Dahl, Continental Tapes) werden haftklebrige Polyurethan/-harnstoffe beschrieben, die durch Einbau zusätzlicher aminischer Kettenverlängerer beziehungsweise Vernetzer in das Polymer erhalten werden. Als nachteilig werden die Komplexität in der Herstellung empfunden sowie die vermutete geringe Selektivität der Haftklebrigkeit auf unterschiedlichen Oberflächen.

In DE 21 39 640 A (Dollhausen et al., Bayer) wird ein Haftklebstoff auf Basis eines aromatischen Diisocyanatourethans beschrieben. Nachteilig ist vor allem die für aromatische Polyurethane typische Vergilbungsneigung.

Zur Erzielung haftklebriger Eigenschaften werden in DE 100 30 908 A (Bolte et al., Henkel) und in EP 0 081 103 A1 (Miyake et al., Takeda) die Verwendung zweier unterschiedlicher lsocyanate innerhalb einer Polyurethan-Zusammensetzung vorgeschlagen. Auch in diesen Fällen wird die Komplexität in der Herstellung als nachteilig empfunden sowie eine geringe Selektivität der Haftklebrigkeit auf unterschiedlichen Oberflächen.

In WO 97/22642 A1 (Chang et al., Bristol Myers Squibb) wird vorgeschlagen, zur Herstellung eines Haftklebstoffs ein NCO-terminiertes Prepolymer und eine Polyhydroxyverbindung so lange bei einer bestimmten Temperatur zusammen zu erhitzen, bis ein Gelanteil von 30 bis 40 % erhalten wird. Nachteilig an dieser Methode ist die vermutete geringe Selektivität der Haftklebrigkeit auf unterschiedlichen Oberflächen, die sich aus dem relativ niedrigen Gelgehalt ergibt.

Aus US 3,796,678 A (Bartizal, 3M) ist ein Polyurethan-Haftklebstoff auf Basis verkappter lsocyanat-Prepolymere bekannt, der in der Herstellung auf Wasser oder organische Lösemittel angewiesen ist. Als nachteilig wird die komplexe Art der Herstellung angesehen, sowie die Notwendigkeit, Wasser oder Lösemittel einsetzen zu müssen.

Ein Polyurethan-Latex-Haftklebstoff wird in WO 98/31760 A1 (Schrock et al., Dow Chemical) beschrieben. Nachteilig ist die Notwendigkeit einer Trocknung, wodurch es entweder unmöglich oder zumindest sehr zeitaufwendig ist, blasenfreie Haftklebstofffilme größerer Dicke zu erzielen.

In einigen Schriften wird ein Polyurethan-Haftklebstoff über die Vernetzungsdichte definiert. ln GB 1,113,925 A (Weller) und GB 1,216,672 A (Grindley) werden Kettenlängen zwischen den Vernetzungspunkten von 130-285 Kettenatomen beziehungsweise mehr als 285 Kettenatomen vorgeschlagen. In der Praxis hat sich gezeigt, dass eine Steuerung der Haftklebeeigenschaften über das Kriterium Kettenlänge allein nicht möglich ist. Eine zu geringe Vernetzungsdichte hat ein starkes Aufziehen auf den meisten Untergründen nach längerer Verklebungsdauer zur Folge, eine zu hohe Vernetzungsdichte führt zu Haftklebstoffen mit unzureichender Haftklebrigkeit. Eine oberflächenspezifische Selektivität der Haftklebeeigenschaften wird nicht erreicht.

ln EP 1 088 871 A1 (Heguri et al., Sekisui) wird für das verwendete Polyisocyanat eine bestimmte Distanz zwischen den lsocyanatgruppen beziehungsweise ein bestimmter Vernetzungsgrad vorgeschrieben. Das Molekulargewicht zwischen zwei Isocyanatgruppen innerhalb des Polyisocyanats soll 220 bis 570 betragen. Auch diese Art der Steuerung der Vernetzungsdichte über die Kettenlänge innerhalb des Polyisocyanats dürfte die oberflächenspezifische Selektivität der Haftklebeeigenschaften nicht verbessern.

Auch in US 6,040,028 A (Cline et al., Bayer) wird ein Polyurethan-Klebstoff (Kontaktklebstoff) über das Molekulargewicht zwischen Vernetzungspunkten definiert. Vorgeschrieben wird ein Molekulargewicht zwischen 7000 und 16000. Weitere Einschränkungen werden unter anderem dahingehend gemacht, dass 0 bis 10 % der Polyole ein Molekulargewicht von 60 bis 400 haben müssen und 90 bis 100 % der Polyole ein Molekulargewicht von 1800 bis 12000.
Auch hier muss angenommen werden, dass die Haftklebeeigenschaften nicht selektiv oberflächenspezifisch sind und dass es auf den meisten Untergründen zu einem starken Aufziehen nach längerer Verklebungsdauer kommt, da die Vernetzungsdichte relativ gering ist und keine Hinweise auf eine mögliche Lösung des Problems gegeben werden.

In WO 01/62818 A1 (Hansen et al., 3M) wird vorgeschlagen, zur Herstellung eines Polyurethan-Haftklebstoffs zwei Polyole oder anderweitige mit NCO-Gruppen reagierende Materialien mit lsocyanaten umzusetzen, wobei sich die mit den lsocyanaten reagierenden Komponenten dahingehend voneinander unterscheiden, dass eine ein Molekulargewicht größer 2000 und eine ein Molekulargewicht kleiner 2000 hat.
Derartige Haftklebstoffe sind unter anderem aus den Beispielen in US 5,227,409 A und US 3,437,622 A bekannt, auch hinsichtlich der Einschränkung (Unteranspruch 5), dass es sich bei den mit den Isocyanaten reagierenden Komponenten fast ausschließlich um Diole handelt. Ferner sind derart zusammengesetzte Polyurethane auch bereits in den Beispielen in EP 1 095 993 A1 und EP 1 101 803 A1 vorbeschrieben, wobei es sich in den letztgenannten Beispielen nicht um Zusammensetzungen zur Erzielung von Haftklebstoffen handelt. Das vorgeschlagene Reaktionsprodukt in WO 01/62818 A1 ist somit nicht eindeutig ein Haftklebstoff. Hinweise auf eine oberflächenspezifische Selektivität der Haftklebeeigenschaften werden nicht gegeben.

Aufgabe der Erfindung ist es, einen Haftklebstoff zur Verfügung zu stellen, der auf polaren Kunststoff- und glatten Metalloberflächen sowie auf Glas gut haftet, der insbesondere leicht wiederablösbar ist, ohne die Oberflächen beim Ablösen zu schädigen, insbesondere wenn diese empfindlich gegenüber mechanischen Einflüssen sind, und der die geschilderten Nachteile des Standes der Technik nicht oder nicht in dem Maße zeigt. Insbesondere soll er auf Papier, Pappe oder ähnlichen Materialien sowie auf menschlicher Haut im wesentlichen nicht oder zumindest nur schwach haften, sich im wesentlichen nicht klebrig anfühlen, nach dem Entfernen keine Rückstände oder fettig aussehenden Flecken hinterlassen, weiterhin mehrfach verwendbar, abwaschbar und lichtstabil sein.

Gelöst wird diese Aufgabe durch einen Haftklebstoff auf Basis von Polyurethan, wie er im Hauptanspruch niedergelegt ist. Gegenstand der Unteransprüche sind dabei vorteilhafte Weiterbildungen des Haftklebstoffs, Verfahren zur Herstellung desselben sowie Verwendungsmöglichkeiten.

Demgemäss betrifft die Erfindung einen Haftklebstoff auf Basis von Polyurethan, der dadurch gekennzeichnet, dass sich das Polyurethan aus folgenden katalytisch miteinander zur Reaktion gebrachten Ausgangsstoffen in den angegeben Verhältnissen zusammensetzt:
a) mindestens einem aliphatischen oder alicyclischen Polyisocyanat, wobei deren Funktionalität jeweils kleiner oder gleich drei ist,
b) einer Kombination aus mindestens einem Polypropylenglykol-Diol und mindestens einem Polypropylenglykol-Triol,
   wobei das Verhältnis der Anzahl der Hydroxylgruppen der Diol-Komponente zu der Anzahl der Hydroxylgruppen der Triol-Komponente kleiner 10 ist, bevorzugt zwischen 0,2 und 5 liegt,
   wobei weiterhin das Verhältnis der Anzahl der Isocyanat-Gruppen zur Gesamtanzahl der Hydroxylgruppen zwischen 0,8 und 1,15, bevorzugt zwischen 0,95 und 1,05, besonders bevorzugt zwischen 1,0 und 1,05 liegt,
   wobei der Katalysator für die Reaktion zum Polyurethan ein Bismutcarboxylat oder ein Bismutcarboxylat-Derivat ist oder enthält,
   und wobei die Diole und Triole alternativ jeweils wie folgt ausgewählt und kombiniert werden:
   - Diole mit einem Molekulargewicht von kleiner oder gleich 1000 werden mit Triolen kombiniert, deren Molekulargewicht größer oder gleich 1000, bevorzugt größer oder gleich 3000 ist,
   - Diole mit einem Molekulargewicht von größer 1000 werden mit Triolen kombiniert, deren Molekulargewicht kleiner 1000 ist.

Um Polyurethane mit ausreichender Lichtstabilität zu erzeugen, müssen bekanntermaßen aliphatische oder alicyclische Polyisocyanate beziehungsweise Polyisocyanate mit nicht aromatisch gebundenen lsocyanatgruppen verwendet werden. Überraschend wurde gefunden, dass aliphatische oder alicyclische Polyisocyanate geeignet sind, um auch das sonstige gewünschte Eigenschaftsprofil der Polyurethan-Haftklebstoffe entsprechend der Aufgabe der Erfindung zu erzeugen. lnsbesondere die oberflächenspezifische Selektivität der Haftklebeeigenschaften lässt sich durch Verwendung von aliphatischen oder alicyclische Polyisocyanaten einstellen.

In einer vorteilhaften Ausführungsform werden aliphatische oder alicyclische Diisocyanate verwendet. Besonders vorteilhaft ist die Verwendung von aliphatischen oder alicyclischen Diisocyanaten mit jeweils unsymmetrischer Molekülstruktur, in denen also die beiden lsocyanatgruppen jeweils eine unterschiedliche Reaktivität besitzen, Insbesondere die sonst für haftklebrige Polyurethane typische Neigung, auf Papier oder Pappe fettig aussehende Flecken zu hinterlassen, wird durch den Einsatz von aliphatischen oder alicyclischen Diisocyanaten mit unsymmetrischer Molekülstruktur deutlich reduziert. Unsymmetrische Molekülstruktur bedeutet, dass das Molekül keine Symmetrieelemente (zum Beispiel Spiegelebenen, Symmetrieachsen, Symmetriezentren) besitzt, dass also keine Symmetrieoperation ausgeführt werden kann, die ein mit dem Ausgangsmolekül deckungsgleiches Molekül erzeugt.

Beispiele geeigneter, erfindungsgemäßer Polyisocyanate sind Butan-1,4-diisocyanat, Tetramethoxybutan-1,4-diisocyanat, Hexan-1,6-diisocyanat, Ethylendiisocyanat, 2,2,4-Trimethyl-hexamethylendiisocyanat, Ethylethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-lsocyanatomethyl-3-isocyanato-1,5,5-trimethylcyclohexan (isophorondiisocyanat), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-lsocyanato-1-(3-isocyanatoprop-1-yl)-1,3,3-trimethyl-cyclohexan, 5-lsocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, chlorierte, bromierte, schwefel- oder phosphorhaltige aliphatische oder alicyclische Diisocyanate, sowie Derivate der aufgeführten Diisocyanate, insbesondere dimerisierte oder trimerisierte Typen.

In einer besonders bevorzugten Ausführungsform wird lsophorondiisocyanat verwendet.

Hinsichtlich der stofflichen und mengenmäßigen Zusammensetzung der mit dem Polyisocyanat zur Reaktion gebrachten Edukte wurde überraschend gefunden, dass Kombinationen aus mindestens einem Polypropylenglykol-Diol und mindestens einem Polypropylenglykol-Triol geeignet sind, um Polyurethane mit dem gewünschten Eigenschaftsprofil entsprechend der Aufgabe der Erfindung zu erzeugen, wenn das Verhältnis der Anzahl der Hydroxylgruppen der Diol-Komponente zu der Anzahl der Hydroxylgruppen der Triol-Komponente kleiner 10 ist, bevorzugt zwischen 0,2 und 5,0 liegt, wenn weiterhin das Verhältnis der Anzahl der Isocyanat-Gruppen zur Gesamtanzahl der Hydroxylgruppen zwischen 0,8 und 1,15, bevorzugt zwischen 0,95 und 1,05, besonders bevorzugt zwischen 1,0 und 1,05 liegt, wenn der Katalysator für die Reaktion zum Polyurethan ein Bismutcarboxylat oder ein Bismutcarboxylat-Derivat ist oder enthält, und wenn die Diole und Triole alternativ jeweils wie folgt ausgewählt und kombiniert werden:
- Diole mit einem Molekulargewicht von kleiner oder gleich 1000 werden mit Triolen kombiniert, deren Molekulargewicht größer oder gleich 1000, bevorzugt größer oder gleich 3000 ist,
- Diole mit einem Molekulargewicht von größer 1000 werden mit Triolen kombiniert, deren Molekulargewicht kleiner 1000 ist.

Als Polypropylenglykole können alle handelsüblichen Polyether auf Basis von Propylenoxid und eines difunktionellen Starters im Falle der Diole und eines trifunktionellen Starters im Falle der Triole eingesetzt werden. Darunter fallen sowohl die konventionell, das heißt im Regelfall mit einem basischen Katalysator, wie zum Beispiel Kaliumhydroxid, hergestellten Polypropylenglykole, als auch die besonders reinen Polypropylenglykole, die DMC (Double metal cyanide)-katalysiert hergestellt werden, und deren Herstellung zum Beispiel in US 5,712,216 A, US 5,693,584 A, WO 99/56874 A1, WO 99/51661 A1, WO 99/59719 A1, WO 99/64152 A1, US 5,952,261 A, WO 99/64493 A1 und WO 99/51657 A1 beschrieben wird.
Charakteristisch an den DMC-katalysierten Polypropylenglykolen ist, dass die nominale" beziehungsweise theoretische Funktionalität von exakt 2 im Falle der Diole beziehungsweise exakt 3 im Falle der Triole auch tatsächlich annähernd erreicht wird.
Bei den konventionell hergestellten Polypropylenglykolen ist die "wahre" Funktionalität stets etwas geringer als die theoretische, und zwar insbesondere bei Polypropylenglykolen mit höherem Molekulargewicht. Ursache ist eine Umlagerungs-Nebenreaktion des Propylenoxids zum Allylalkohol.

Weiterhin können auch alle Polypropylenglykol-Diole beziehungsweise -Triole eingesetzt werden, in denen Ethylenoxid mit einpolymerisiert ist, was in vielen handelsüblichen Polypropylenglykolen der Fall ist, um eine erhöhte Reaktivität gegenüber Isocyanaten zu erzielen.

Durch Variation des Verhältnisses der Anzahl der Hydroxylgruppen des Diols zu der des Triols innerhalb der gesetzten Grenzen kann die Klebkraft beeinflusst und anwendungsgerecht eingestellt werden. Überraschend wurde gefunden, dass die Klebkraft zunimmt, je höher das Verhältnis der Anzahl der Diol-OH-Gruppen zu der der Triol-OH-Gruppen ist.
Der Klebkraftbereich, der innerhalb der angegeben Grenzen eingestellt werden kann, liegt ungefähr in einem Bereich bis 3,0 N/cm, gemessen auf Stahl gemäß PSTC-101 (siehe Beschreibung der Prüfmethoden).

Überraschend wurde gefunden, dass die Verwendung eines bismutcarboxylat- oder bismutcarboxylatderivathaltigen Katalysators oder Katalysatorgemisches, dessen Verwendung zur Beschleunigung von Polyurethan-Reaktionen bekannt ist, die Haftklebeeigenschaften des Polyurethans erheblich in der Weise steuert, dass eine oberflächenspezifische Selektivität der Haftklebeeigenschaften erreicht wird.
Beispiele für Bismutcarboxylate sind Bismuttrisdodecanoat, Bismuttrisdecanoat, Bismuttrisneodecanoat, Bismuttrisoctanoat, Bismuttrisisooctanoat, Bismuttrishexanoat, Bismuttrispentanoat, Bismuttrisbutanoat, Bismuttrispropanoat oder Bismuttrisacetat.

In einer möglichen Ausführungsform enthält der polyurethan-basierte Haftklebstoff weitere Rezeptierungsbestandteile wie zum Beispiel zusätzliche Katalysatoren, Alterungsschutzmittel (Antioxidantien), Lichtschutzmittel wie zum Beispiel UV-Absorber, rheologische Additive sowie sonstige Hilfs- und Zusatzstoffe.

Bei der Auswahl dieser Stoffe ist darauf zu achten, dass diese Stoffe keine Migrationstendenz zum zu verklebenden Substrat hin haben, damit es nicht auf diese Weise zur Fleckenbildung kommt. Aus dem gleichen Grund ist die Konzentration dieser Stoffe, insbesondere der flüssigen, in der Gesamtzusammensetzung möglichst niedrig zu halten. Die zusätzliche Verwendung von Weichmachern oder Klebrigmacherharzen sollte daher vermieden werden, ohne dass diese Stoffe damit gänzlich ausgeschlossen werden sollen.

Um die Reaktion zwischen der Isocyanat-Komponente und der mit dem lsocyanat reagierenden Komponente weiter zu beschleunigen, können zusätzlich alle dem Fachmann bekannten Katalysatoren, wie zum Beispiel tertiäre Amine oder zinnorganische Verbindungen eingesetzt werden.

Die Verwendung von Antioxidantien ist vorteilhaft, aber nicht zwingend notwendig.
Zu den geeigneten Antioxidantien zählen zum Beispiel sterisch gehinderte Phenole, Hydrochinon-Derivate, sterisch gehinderte Amine, organische Schwefelverbindungen oder organische Phosphorverbindungen.

Lichtschutzmittel oder UV-Absorber können optional ebenso eingesetzt werden.

Als Lichtschutzmittel finden die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verwendung.

Beispiele für rheologische Additive sind pyrogene Kieselsäuren, Schichtsilikate (zum Beispiel Bentonite), hochmolekulare Polyamidpulver oder Rizinusölderivat-Pulver.

Der Haftklebstoff wird in einer bevorzugten Ausführungsform nach dem im folgenden beschriebenen Verfahren kontinuierlich hergestellt:

Es werden in einem Behälter A im wesentlichen die vorgemischte Polypropylenglykol-Kombination (Polyol-Komponente) und in einem Behälter B im wesentlichen die Isocyanat-Komponente vorgelegt, wobei gegebenenfalls die weiteren Rezeptierungsbestandteile diesen Komponenten bereits zuvor in einem üblichen Mischverfahren zugemischt wurden.
Die Polyol- und die lsocyanat-Komponente werden über Präzisionspumpen durch den Mischkopf oder das Mischrohr einer Mehrkomponenten-Misch- und Dosieranlage gefördert, dort homogen vermischt und somit zur Reaktion gebracht. Die somit gemischten, miteinander chemisch reagierenden Komponenten werden unmittelbar danach auf ein bahnförmiges Trägermaterial aufgebracht, das sich bevorzugt mit konstanter Geschwindigkeit bewegt. Die Art des Trägermaterials richtet sich nach dem herzustellenden Artikel. Das mit der reagierenden Polyurethanmasse beschichtete Trägermaterial wird durch einen Wärmekanal geführt, in dem die Polyurethanmasse zum Haftklebstoff aushärtet. Das Auftragsgewicht der Polyurethanmasse ist frei wählbar. Es richtet sich nach dem herzustellenden Artikel. Das beschichtete Trägermaterial wird abschließend in einer Wickelstation aufgewickelt.

Das beschriebene Verfahren ermöglicht es, lösemittel- und wasserfrei zu arbeiten. Das lösemittel- und wasserfreie Arbeiten ist die bevorzugte Verfahrensweise, ist aber nicht zwingend notwendig. Um zum Beispiel besonders geringe Auftragsgewichte zu erzielen, können die Komponenten in geeigneter Weise verdünnt werden.

Um die Verankerung der Polyurethanmasse auf den bahnförmigen Trägermaterialien zu verbessern, können alle bekannten Methoden der Oberflächenvorbehandlung, wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus auf das Trägermaterial aufgetragen werden kann als auch im Extrusions- oder Coextrusionsverfahren.

Um die Abrolleigenschaften der gewickelten Rolle zu verbessern, kann die Rückseite des bahnförmigen Materials mit einem Trennlack (Releaselack) vorbeschichtet werden oder aber eine trennende co- oder aufextrudierte Rückseitenbeschichtung tragen.

Ein Haftklebstoff auf Basis von Polyurethan gemäß obiger Beschreibung, dadurch gekennzeichnet, dass sich das Polyurethan aus folgenden miteinander zur Reaktion gebrachten Ausgangsstoffen in den angegeben Verhältnissen zusammensetzt:
a) mindestens einem aliphatischen oder alicyclischen Polyisocyanat, wobei deren Funktionalität jeweils kleiner oder gleich drei ist,
b) einer Kombination aus mindestens einem Polypropylenglykol-Diol und mindestens einem Polypropylenglykol-Triol,
   wobei das Verhältnis der Anzahl der Hydroxylgruppen der Diol-Komponente zu der Anzahl der Hydroxylgruppen der Triol-Komponente kleiner 10 ist, bevorzugt zwischen 0,2 und 5,0 liegt,
   wobei weiterhin das Verhältnis der Anzahl der lsocyanat-Gruppen zur Gesamtanzahl der Hydroxylgruppen zwischen 0,8 und 1,15, bevorzugt zwischen 0,95 und 1,05, besonders bevorzugt zwischen 1,0 und 1,05 liegt,
   wobei der Katalysator für die Reaktion zum Polyurethan ein Bismutcarboxylat oder ein Bismutcarboxylat-Derivat ist oder enthält,
   und wobei die Diole und Triole alternativ jeweils wie folgt ausgewählt und kombiniert werden:
   - Diole mit einem Molekulargewicht von kleiner oder gleich 1000 werden mit Triolen kombiniert, deren Molekulargewicht größer oder gleich 1000, bevorzugt größer oder gleich 3000 ist,
   - Diole mit einem Molekulargewicht von größer 1000 werden mit Triolen kombiniert, deren Molekulargewicht kleiner 1000 ist,
   zeigt hervorragende Produkteigenschaften, die auch für den Fachmann derartig nicht vorherzusehen waren.

Der Haftklebstoff ist geeignet, um beispielsweise kleine Gegenstände mit empfindlichen Oberflächen aus polarem Kunststoff, Glas oder Metall so zu befestigen beziehungsweise zu fixieren, dass einerseits ein sicherer Halt dieser Gegenstände gegeben ist, diese Gegenstände andererseits jederzeit problemlos abgelöst werden können, weitestgehend ohne dass der nunmehr offene, das heißt nicht mehr abgedeckte Haftklebstoff durch hohe Eigenklebrigkeit stört und ohne dass die Oberflächen der Gegenstände durch den Klebe- und Ablösevorgang beschädigt, verunreinigt oder zerstört werden. Der Haftklebstoff kann als Teil eines Gesamtklebekonzepts zum Verkleben von Gegenständen in Zeitschriften, Büchern, Briefen oder generell auf Papieren eingesetzt werden und nach dem Ablösen der Gegenstände in den Zeitschriften, Büchern, Briefen oder generell auf den Papieren verbleiben, da er auf diesen Untergründen nicht oder zumindest nur schwach haftet und es somit später nicht zum Zusammenkleben oder zumindest nicht zum irreversiblen Zusammenkleben einzelner Seiten in den Zeitschriften, Büchern, Briefen oder generell auf übereinandergelegten Papieren kommt. Da der Haftklebstoff gemäß obiger Beschreibung auch auf menschlicher Haut im wesentlichen nicht oder zumindest nur schwach haftet, entsteht bei Berührung kein unangenehmes Klebrigkeitsgefühl.

Der Haftklebstoff hinterlässt nach dem Ablösen keine Rückstände oder fettig aussehende Flecken auf den Gegenständen und schädigt die Gegenstände nicht, insbesondere auch dann nicht, wenn diese gegenüber mechanischen Einflüssen empfindlich sind, was bei Gegenständen mit sehr glatten Oberflächen oft der Fall ist.

Der Haftklebstoff gemäß obiger Beschreibung ist mehrfach verwendbar, ohne dass es zu Einbußen in der Klebkraft kommt. Wird der Haftklebstoff unverklebt und ohne Schutzabdeckung längere Zeit in einer normalen Umgebung aufbewahrt, so staubt er naturgemäß ein, so dass sich seine Klebkraft dadurch reduziert. Eine solche Staubschicht ist mit normalem Leitungswasser jederzeit leicht wieder entfernbar. Nach dem Trocknen ist die ursprüngliche Klebkraft sofort wieder in vollem Umfang hergestellt. Selbst große Mengen an Staub, Sand oder Pulvern aller Korngrößen lassen sich durch Abwaschen leicht wieder entfernen.

Dadurch, dass der Haftklebstoff lichtstabil ist, kann er auch zur Verklebung auf licht- und sonnenexponierten Gegenständen, Materialien oder Untergründen eingesetzt werden, zum Beispiel auf oder hinter Fensterscheiben oder Autoscheiben. Generell ist der Haftklebstoff für Innen- wie für Außenanwendungen gleichermaßen geeignet.

lm folgenden soll die Erfindung anhand von Beispielen erläutert werden, ohne diese damit allerdings einschränken zu wollen.

Die folgenden Prüfmethoden wurden eingesetzt, um die nach den beschriebenen Verfahren hergestellten Muster kurz zu charakterisieren.
- Die Prüfmuster wurden jeweils hergestellt, indem die zunächst flüssige, reaktive Polyurethan-Haftklebstoffmasse mit einem Auftragsgewicht von 50 g/m² auf eine 26 µm dicke Polyesterfolie beschichtet und bei 100 °C ausgehärtet wurde. Die Messungen erfolgten nach einer "Reifezeit" (bei Raumtemperatur) von einer Woche.
- Die Klebkraft wurde nach PSTC-101 bestimmt. Nach dieser Methode wird der Verbund aus Haftklebstoffschicht und Polyesterfolie auf unterschiedlichen Haftgründen (Stahl, ABS, PS, PVC, PP) aufgebracht und anschließend unter definierten Bedingungen mittels einer Zugprüfmaschine abgezogen. Der Abzugswinkel beträgt jeweils 180°, die Abzugsgeschwindigkeit 300 mm/min. Die zum Abziehen erforderliche Kraft ist die Klebkraft, welche in der Einheit N/cm angegeben wird.
- Die Tackmessung (Messung der Oberflächenklebrigkeit) erfolgte nach der Stempelmessmethode in Anlehnung an ASTM D 2979-01 mit dem Texture Analyser TA 2 der Firma SMS (Stable Micro Systems). Nach dieser Methode wird ein zylindrischer Stahlstempel mit definierter Andruckkraft und -geschwindigkeit auf die zu untersuchende Probe gedrückt und nach definierter Zeit mit definierter Geschwindigkeit wieder abgezogen. Das Prüfergebnis ist die zum Abziehen erforderliche maximale Kraft, angegeben in der Einheit N.
   Die Prüfparameter waren im einzelnen:
   - Zylinderradius: 1 mm ⇒ Zylinderfläche: 3,14 mm²
   - Andruckgeschwindigkeit: 0,1 mm/s
   - Andruckkraft: 5 N
   - Andruckzeit: 0,01 s
   - Abzugsgeschwindigkeit: 0,6 mm / s
- Die Prüfung der Lichtbeständigkeit erfolgte mit einer sogenannten Sonnenlichtlampe der Firma Osram mit der Bezeichnung ULTRA-VITALUX ®, Leistungsaufnahme 300 W. Die Proben wurden aus einer Entfernung von 50 cm ununterbrochen offen bestrahlt. Die Temperatur am Ort der Probe betrug dabei jeweils ca. 60 °C. Beurteilt wurde die farbliche Veränderung des Haftklebstoffs sowie die Klebkraft-Veränderung jeweils nach einer und nach zwei Wochen Bestrahlungsdauer. Dies entspricht ungefähr einer jeweils 10-fachen ununterbrochenen realen Sommersonnenbelastung in Mitteleuropa.

### Beispiele

Die Beschichtungen erfolgten in den Beispielen auf einer üblichen Laborbeschichtungsanlage für kontinuierliche Beschichtungen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine übliche Mehrkomponenten-Misch- und Dosieranlage mit einem dynamischen Mischsystem verwendet. Der Mischkopf war für zwei flüssige Komponenten konzipiert. Der Mischrotor hatte eine variable Drehzahl bis max. ca. 5000 U/min. Bei den Dosierpumpen dieser Anlage handelte es sich um Zahnradpumpen mit einer Förderleistung von max. ca. 2 l/min.

Die Polyol-Komponenten wurden in einem üblichen beheiz- und evakuierbaren Mischkessel gefertigt. Während des jeweils ca. zweistündigen Mischvorgangs wurde die Temperatur der Mischung auf ca. 70 °C eingestellt und zur Entgasung der Komponenten wurde Vakuum angelegt.

In Tabelle 1 sind die zur Herstellung der Polyurethan-Haftklebstoffe verwendeten Basismaterialien aufgeführt, und zwar jeweils mit Handelsnamen und Hersteller. Die genannten Rohstoffe sind alle frei im Handel erhältlich.

**Tabelle 1: Zur Herstellung der Polyurethan-Haftklebstoffe eingesetzte Basismaterialien mit Handelsnamen und Hersteller**

| | | |
|---|---|---|
| Handelsname | Chemische Basis | Hersteller / Lieferant |
| | Mittlere Molmasse OH- bzw. NCO-Zahl | |
| Desmophen 1262 BD ® | Polypropylenglykol, Diol (M=430) (4661 mmol OH / kg) | Bayer |
| Desmophen 1112 BD ® | Polypropylenglykol, Diol (M=1000) (1977 mmol OH / kg) | Bayer |
| Acclaim 4220 N ® | Polypropylenglykol, Diol, hochrein, DMC-katalysiert hergestellt (M=4000) (500 mmol OH / kg) | Bayer |
| Desmophen 1380 BT ® | Polypropylenglykol, Triol (M=450) (6774 mmol OH / kg) | Bayer |
| Desmophen 3061 BT ® | Polypropylenglykol, Triol (M=3000) (1000 mmol OH / kg) | Bayer |
| Desmophen 5035 BT ® | Polypropylenglykol, Triol (M=4800) (624 mmol OH / kg) | Bayer |
| Acclaim 6320 N ® | Polypropylenglykol, Triol, hochrein, DMC-katalysiert hergestellt (M=6000) (500 mmol OH / kg) | Bayer |
| Vestanat IPDI ® | Isophorondüsocyanat (M= 222,3) (8998 mmol NCO / kg) | Degussa-Hüls |
| Vestanat TMDI ® | 2,2,4-Trimethyl-hexamethylendiisocyanat (M=210,3) (9500 mmol NCO / kg) | Degussa-Hüls |
| Handelsname | Chemische Basis | Hersteller / Lieferant |
| Desmodur N 3300 ® | aliphatisches Polyisocyanat auf Basis Hexamethylendiisocyanat (5143 mmol NCO / kg) | Bayer |
| Desmodur W ® | Dicyclohexylmethandüsocyanat (M= 262) (7571 mmol NCO / kg) | Bayer |
| | Bismuttrisneodecanoat CAS-Nr. 34364-26-6 | |
| Mark DBTL ® | Dibutylzinndilaurat | Nordmann, Rassmann |
| Tinuvin 292 ® | sterisch gehindert. Amin, Lichtschutzmittel | Ciba |
| Tinuvin 400 ® | Triazin-Derivat, UV-Schutzmittel | Ciba |
| Aerosil R202 ® | hydrophobierte, pyrogene Kieselsäure | Degussa-Hüls |

### Beispiel 1

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 1,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 12,1 | 56,3 mmol OH |
| | Acclaim 6320 N ® | 75,1 | 37,5 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 10,6 | 95,7 mmol NCO |

Die Prüfmuster (50 g/m² Polyurethan-Haftklebstoff auf einer 26 µm dicken Polyesterfolie, siehe oben) erzielten folgende Klebkräfte:
- 0,15 N/cm auf Stahl,
- 0,23 N/cm auf ABS,
- 0,36 N/cm auf PS,
- 0,41 N/cm auf PVC.
Die Tackmessung (auf Stahl) ergab einen Wert von 0,4 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 2

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 1,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 12,3 | 57,4 mmol OH |
| | Acclaim 6320 N ® | 76,6 | 38,3 mmol OH |
| | Bismuttrisneodecanoat | 0,3 | |
| B-Komponente | Vestanat IPDI ® | 10,8 | 97,6 mmol NCO |

Die Prüfmuster (50 g/m² Polyurethan-Haftklebstoff auf einer 26 µm dicken Polyesterfolie, siehe oben) erzielten folgende Klebkräfte:
- 0,17 N/cm auf Stahl,
- 0,22 N/cm auf ABS, 0,31 N/cm auf PS,
- 0,44 N/cm auf PVC.
Die Tackmessung (auf Stahl) ergab einen Wert von 0,4 N. Nach einer Woche Bestrahlung mit der Sonnenlichtlampe traten keine Veränderungen auf, weder farblich noch in der Klebkraft. Nach zwei Wochen Bestrahlung traten keine farblichen Veränderungen auf, jedoch war die Eigenklebrigkeit jetzt deutlich fühlbar. Die Klebkraft (auf Stahl) betrug jetzt 1,6 N/cm.
Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 3

Der erfindungsgemäße Polyurethan-Haftklebstoff setzt sich wie folgt zusammen:
NCO / OH - Verhältnis: 1,02
Verhältnis Anzahl Diol-OH Anzahl Triol-OH: 2,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 17,9 | 83,3 mmol OH |
| | Acclaim 6320 N ® | 66,7 | 33,3 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 13,2 | 119,0 mmol NCO |

Die Prüfmuster (50 g/m² Polyurethan-Haftklebstoff auf einer 26 µm dicken Polyesterfolie, siehe oben) erzielten folgende Klebkräfte:
- 0,19 N/cm auf Stahl,
- 0,25 N/cm auf ABS,
- 0,47 N/cm auf PS,
- 0,53 N/cm auf PVC.
Die Tackmessung (auf Stahl) ergab einen Wert von 0,5 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 4

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 4,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 24,5 | 114,2 mmol OH |
| | Acclaim 6320 N ® | 57,1 | 28,6 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 16,2 | 145,6 mmol NCO |

Die Prüfmuster (50 g/m² Polyurethan-Haftklebstoff auf einer 26 µm dicken Polyesterfolie, siehe oben) erzielten folgende Klebkräfte:
- 0,26 N/cm auf Stahl,
- 0,53 N/cm auf ABS,
- 0,68 N/cm auf PS,
- 0,76 N/cm auf PVC.
Die Tackmessung (auf Stahl) ergab einen Wert von 0,7 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 5

Der erfindungsgemäße Polyurethan-Haftklebstoff setzt sich wie folgt zusammen:
NCO / OH - Verhältnis: 1,05
Verhältnis Anzahl Diol-OH / Anzahl Triol-OH: 10,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 38,6 | 180,1 mmol OH |
| | Acclaim 6320 N ® | 36,0 | 18,0 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 23,2 | 208,0 mmol NCO |

Die Prüfmuster (50 g/m² Polyurethan-Haftklebstoff auf einer 26 µm dicken Polyesterfolie, siehe oben) erzielten folgende Klebkräfte:
- 0,53 N/cm auf Stahl,
- 1,13 N/cm auf ABS,
- 0,95 N/cm auf PS,
- 1,18 N/cm auf PVC.
Die Tackmessung (auf Stahl) ergab einen Wert von 1,3 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 6

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 10,3 | 47,8 mmol OH |
| | Desmophen 5035 BT ® | 76,7 | 47,8 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI® | 10,8 | 97,6 mmol NCO |

Die Prüfmuster (50 g/m² Polyurethan-Haftklebstoff auf einer 26 µm dicken Polyesterfolie, siehe oben) erzielten folgende Klebkräfte:
- 0,13N/cm auf Stahl,
- 0,22 N/cm auf ABS,
- 0,36 N/cm auf PS,
- 0,32 N/cm auf PVC.
Die Tackmessung (auf Stahl) ergab einen Wert von 0,3 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 7

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 10,5 | 48,8 mmol OH |
| | Desmophen 5035 BT ® | 78,2 | 48,8 mmol OH |
| | Bismuttrisneodecanoat | 0,3 | |
| B-Komponente | Vestanat IPDI ® | 11,0 | 99,5 mmol NCO |

Die Prüfmuster (50 g/m² Polyurethan-Haftklebstoff auf einer 26 µm dicken Polyesterfolie, siehe oben) erzielten folgende Klebkräfte:
- 0,15 N/cm auf Stahl,
- 0,28 N/cm auf ABS,
- 0,46 N/cm auf PS,
- 0,38 N/cm auf PVC.
Die Tackmessung (auf Stahl) ergab einen Wert von 0,3 N. Nach einer Woche Bestrahlung mit der Sonnenlichtlampe traten keine Veränderungen auf, weder farblich noch in der Klebkraft. Nach zwei Wochen Bestrahlung traten keine farblichen Veränderungen auf, jedoch war die Eigenklebrigkeit jetzt deutlich fühlbar. Die Klebkraft (auf Stahl) betrug jetzt 1,8 N/cm.
Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

Nach einer Woche Bestrahlung mit der Sonnenlichtlampe traten keine Veränderungen auf, weder farblich noch in der Klebkraft. Nach zwei Wochen Bestrahlung traten keine farblichen Veränderungen auf, jedoch war der Haftklebstoff merklich weicher. Die Eigenklebrigkeit hatte zugenommen. Die Klebkraft betrug jetzt 7,9 N/cm.

### Beispiel 8

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 1,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 14,3 | 66,5 mmol OH |
| | Desmophen 5035 BT ® | 71,0 | 44,3 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 12,6 | 113,0 mmol NCO |

Die Prüfmuster (50 g/m² Polyurethan-Haftklebstoff auf einer 26 µm dicken Polyesterfolie, siehe oben) erzielten folgende Klebkräfte:
- 0,21 N/cm auf Stahl,
- 0,34 N/cm auf ABS,
- 0,52 N/cm auf PS,
- 0,48 N/cm auf PVC.
Die Tackmessung (auf Stahl) ergab einen Wert von 0,5 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 9

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 2,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 20,7 | 96,4 mmol OH |
| | Desmophen 5035 BT ® | 61,8 | 38,6 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 15,3 | 137,6 mmol NCO |

Die Prüfmuster (50 g/m² Polyurethan-Haftklebstoff auf einer 26 µm dicken Polyesterfolie, siehe oben) erzielten folgende Klebkräfte:
- 0,31 N/cm auf Stahl,
- 0,62 N/cm auf ABS,
- 0,58 N/cm auf PS,
- 0,52 N/cm auf PVC.
Die Tackmessung (auf Stahl) ergab einen Wert von 0,7 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 10

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 4,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 27,7 | 129,3 mmol OH |
| | Desmophen 5035 BT ® | 51,8 | 32,3 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 18,3 | 164,8 mmol NCO |

Die Prüfmuster (50 g/m² Polyurethan-Haftklebstoff auf einer 26 µm dicken Polyesterfolie, siehe oben) erzielten folgende Klebkräfte:
- 0,42 N/cm auf Stahl,
- 0,81 N/cm auf ABS,
- 0,68 N/cm auf PS,
- 0,73 N/cm auf PVC.
Die Tackmessung (auf Stahl) ergab einen Wert von 1,0 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 11

Der erfindungsgemäße Polyurethan-Haftklebstoff setzt sich wie folgt zusammen:
NCO / OH - Verhältnis: 0,90
Verhältnis Anzahl Diol-OH / Anzahl Triol-OH: 0,3

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 5,3 | 24,6 mmol OH |
| | Desmophen 3061 BT ® | 81,9 | 81,9 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 10,6 | 95,8 mmol NCO |

Die Prüfmuster (50 g/m² Polyurethan-Haftklebstoff auf einer 26 µm dicken Polyesterfolie, siehe oben) erzielten folgende Klebkräfte:
- 0,41 N/cm auf Stahl,
- 0,43 N/cm auf ABS,
- 0,51 N/cm auf PS,
- 0,51 N/cm auf PVC.
Die Tackmessung (auf Stahl) ergab einen Wert von 0,5 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 12

Der erfindungsgemäße Polyurethan-Haftklebstoff setzt sich wie folgt zusammen:
NCO / OH - Verhältnis: 0,95
Verhältnis Anzahl Diol-OH / Anzahl Triol-OH: 0,7

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 11,1 | 51,5 mmol OH |
| | Desmophen 3061 BT ® | 73,5 | 73,5 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 13,2 | 118,8 mmol NCO |

Die Prüfmuster (50 g/m² Polyurethan-Haftklebstoff auf einer 26 µm dicken Polyesterfolie, siehe oben) erzielten folgende Klebkräfte:
- 0,63 N/cm auf Stahl,
- 0,51 N/cm auf ABS,
- 0,49 N/cm auf PS,
- 0,52 N/cm auf PVC.
Die Tackmessung (auf Stahl) ergab einen Wert von 0,5 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 13

Der erfindungsgemäße Polyurethan-Haftklebstoff setzt sich wie folgt zusammen:
NCO / OH - Verhältnis: 0,95
Verhältnis Anzahl Diol-OH Anzahl Triol-OH: 1,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 19,9 | 92,5 mmol OH |
| | Desmophen 3061 BT ® | 61,7 | 61,7 mmol OH |
| | Bismuttrisneodecanoat | 0,3 | |
| | Tinuvin 292 @ | 0,3 | |
| | Tinuvin 400 ® | 0,6 | |
| | Aerosil R202 ® | 1,0 | |
| B-Komponente | Vestanat IPDI ® | 16,2 | 146,5 mmol NCO |

Die Prüfmuster (50 g/m² Polyurethan-Haftklebstoff auf einer 26 µm dicken Polyesterfolie, siehe oben) erzielten folgende Klebkräfte:
- 0,72 N/cm auf Stahl,
- 0,81 N/cm auf ABS,
- 0,55 N/cm auf PS,
- 0,76 N/cm auf PVC.
Die Tackmessung (auf Stahl) ergab einen Wert von 0,8 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 14

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 2,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 18,0 | 83,9 mmol OH |
| | Acclaim 6320 N ® | 67,2 | 33,6 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat TMDI ® | 12,6 | 119,9 mmol NCO |

Die Prüfmuster (50 g/m² Polyurethan-Haftklebstoff auf einer 26 µm dicken Polyesterfolie, siehe oben) erzielten folgende Klebkräfte:
- 0,32 N/cm auf Stahl,
- 0,31 N/cm auf ABS,
- 0,45 N/cm auf PS,
- 0,49 N/cm auf PVC.
Die Tackmessung (auf Stahl) ergab einen Wert von 0,6 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 15

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 2,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 16,2 | 75,6 mmol OH |
| | Acclaim 6320 N ® | 60,6 | 30,3 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Desmophen N 3300 ® | 21,0 | 108,0 mmol NCO |

Die Prüfmuster (50 g/m² Polyurethan-Haftklebstoff auf einer 26 µm dicken Polyesterfolie, siehe oben) erzielten folgende Klebkräfte:
- 0,18 N/cm auf Stahl,
- 0,21 N/cm auf ABS,
- 0,31 N/cm auf PS,
- 0,26 N/cm auf PVC.
Die Tackmessung (auf Stahl) ergab einen Wert von 0,3 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 16

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 2,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 17,5 | 81,2 mmol OH |
| | Acclaim 6320 N ® | 65,0 | 32,5 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Desmodur W ® | 15,3 | 116,0 mmol NCO |

Die Prüfmuster (50 g/m² Polyurethan-Haftklebstoff auf einer 26 µm dicken Polyesterfolie, siehe oben) erzielten folgende Klebkräfte:
- 0,15 N/cm auf Stahl,
- 0,23 N/cm auf ABS,
- 0,18 N/cm auf PS,
- 0,21 N/cm auf PVC.
Die Tackmessung (auf Stahl) ergab einen Wert von 0,3 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 17

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 2,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 48,7 | 96,1 mmol OH |
| | Desmophen 3061 BT ® | 34,3 | 34,3 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 14,8 | 133,1 mmol NCO |

Die Prüfmuster (50 g/m² Polyurethan-Haftklebstoff auf einer 26 µm dicken Polyesterfolie, siehe oben) erzielten folgende Klebkräfte:
- 0,21 N/cm auf Stahl,
- 0,31 N/cm auf ABS,
- 0,56 N/cm auf PS,
- 0,68 N/cm auf PVC.
Die Tackmessung (auf Stahl) ergab einen Wert von 0,5 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 18

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 4,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 43,1 | 85,1 mmol OH |
| | Acclaim 6320 N ® | 42,6 | 21,3 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 12,1 | 108,6 mmol NCO |

Die Prüfmuster (50 g/m² Polyurethan-Haftklebstoff auf einer 26 µm dicken Polyesterfolie, siehe oben) erzielten folgende Klebkräfte:
- 0,53 N/cm auf Stahl,
- 0,82 N/cm auf ABS,
- 0,93 N/cm auf PS,
- 1,12 N/cm auf PVC.
Die Tackmessung (auf Stahl) ergab einen Wert von 1,1 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 19

Der erfindungsgemäße Polyurethan-Haftklebstoff setzt sich wie folgt zusammen:
NCO / OH - Verhältnis: 1,02
Verhältnis Anzahl Diol-OH Anzahl Triol-OH: 0,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Acclaim 4220 N ® | 74,1 | 37,0 mmol OH |
| | Desmophen 1380 BT ® | 11,1 | 74,1 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 12,6 | 113,4 mmol NCO |

Die Prüfmuster (50 g/m² Polyurethan-Haftklebstoff auf einer 26 µm dicken Polyesterfolie, siehe oben) erzielten folgende Klebkräfte:
- 0,43 N/cm auf Stahl,
- 0,62 N/cm auf ABS,
- 0,81 N/cm auf PS,
- 0,79 N/cm auf PVC.
Die Tackmessung (auf Stahl) ergab einen Wert von 0,9 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 20

Der erfindungsgemäße Polyurethan-Haftklebstoff setzt sich wie folgt zusammen:
NCO OH - Verhältnis: 1,02
Verhältnis Anzahl Diol-OH / Anzahl Triol-OH: 1,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 4220 N ® | 85,4 | 42,7 mmol OH |
| | Desmophen 1380 BT ® | 4,3 | 28,6 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 8,1 | 72,6 mmol NCO |

Die Prüfmuster (50 g/m² Polyurethan-Haftklebstoff auf einer 26 µm dicken Polyesterfolie, siehe oben) erzielten folgende Klebkräfte:
- 0,92 N/cm auf Stahl,
- 1,13 N/cm auf ABS,
- 1,10 N/cm auf PS,
- 0,95 N/cm auf PVC.
Die Tackmessung (auf Stahl) ergab einen Wert von 1,2 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 21

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 1,5
Verhältnis Anzahl Diol-kurzkettig-OH / Anzahl Diol-langkettig-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 5,6 | 26,0 mmol OH |
| | Desmophen 1112 BT ® | 13,1 | 26,0 mmol OH |
| | Acclaim 6320 N ® | 69,3 | 34,6 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 9,8 | 88,3 mmol NCO |

Die Prüfmuster (50 g/m² Polyurethan-Haftklebstoff auf einer 26 µm dicken Polyesterfolie, siehe oben) erzielten folgende Klebkräfte:
- 0,52 N/cm auf Stahl,
- 0,61 N/cm auf ABS,
- 0,92 N/cm auf PS,
- 0,83 N/cm auf PVC.
Die Tackmessung (auf Stahl) ergab einen Wert von 0,7 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 22

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 1,5
Verhältnis Anzahl Triol-kurzkettig-OH / Anzahl Triol-langkettig-OH: 2,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 16,3 | 75,7 mmol OH |
| | Desmophen 3061 BT ® | 33,6 | 33,6 mmol OH |
| | Acclaim 6320 N ® | 33,6 | 16,8 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 14,3 | 128,7 mmol NCO |

Die Prüfmuster (50 g/m² Polyurethan-Haftklebstoff auf einer 26 µm dicken Polyesterfolie, siehe oben) erzielten folgende Klebkräfte:
- 0,30 N/cm auf Stahl,
- 0,41 N/cm auf ABS,
- 0,32 N/cm auf PS,
- 0,27 N/cm auf PVC.
Die Tackmessung (auf Stahl) ergab einen Wert von 0,3 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Beispiel 23

Der erfindungsgemäße Polyurethan-Haftklebstoff setzt sich wie folgt zusammen:
NCO / OH - Verhältnis: 1,02
Verhältnis Anzahl Diol-OH / Anzahl Triol-OH: 1,0
Verhältnis Anzahl NCO (IPDI) / NCO (TMDI): 2,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen1262 BD ® | 8,6 | 40,1 mmol OH |
| | Acclaim 6320 N ® | 80,2 | 40,1 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 6,1 | 54,6 mmol NCO |
| | Vestanat TMDI | 2,9 | 27,3 mmol NCO |

Die Prüfmuster (50 g/m² Polyurethan-Haftklebstoff auf einer 26 µm dicken Polyesterfolie, siehe oben) erzielten folgende Klebkräfte:
- 0,14 N/cm auf Stahl,
- 0,27 N/cm auf ABS,
- 0,39 N/cm auf PS,
- 0,48 N/cm auf PVC.
Die Tackmessung (auf Stahl) ergab einen Wert von 0,4 N. Nach zwei Wochen Bestrahlung mit der Sonnenlichtlampe traten keine Veränderungen auf, weder farblich noch in der Klebkraft. Die Haftung auf Papier und Pappe war äußerst gering. Der Haftklebstoff ließ sich durch bloßes Schütteln von diesen trennen. Der Haftklebstoff wurde in einige Bücher, Zeitungen und Zeitschriften hineingeklebt. Auch nach einer Verklebungsdauer von einem halben Jahr ließen sich die entsprechend verklebten Seiten wieder problemlos voneinander trennen und der Haftklebstoff konnte mühelos entfernt werden, ohne Rückstände oder fettig aussehende Flecken zu hinterlassen und ohne die Papiere zu schädigen. Der Haftklebstoff klebte nicht an der Haut. Weiterhin war der Haftklebstoff abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem der Haftklebstoff 20 mal hintereinander auf PVC geklebt und wieder abgelöst wurde. Die Klebkraft lag anschließend immer noch auf dem ursprünglichen Niveau.

### Vergleichsbeispiele

### Vergleichsbeispiel 1

Polyurethan-Zusammensetzung:
NCO OH - Verhältnis: 0,95
Verhältnis Anzahl Diol-OH / Anzahl Triol-OH: 5,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 31,8 | 148 mmol OH |
| | Desmophen 5035 BT ® | 47,3 | 29,5 mmol OH |
| | Mark DBTL ® | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 18,7 | 168,6 mmol NCO |

Die Prüfmuster (50 g/m² Polyurethan-Haftklebstoff auf einer 26 µm dicken Polyesterfolie, siehe oben) erzielten eine Klebkraft auf Stahl von 7,4 N/cm. Der Haftklebstoff klebte sehr stark auf Papier, so dass er keineswegs einfach vom Papier abgeschüttelt werden konnte. Er klebte ebenfalls stark auf der Haut.

### Vergleichsbeispiel 2

Polyurethan-Zusammensetzung:
NCO / OH - Verhältnis: 0,7
Verhältnis Anzahl Diol-OH / Anzahl Triol-OH: 2,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 21,7 | 101,3 mmol OH |
| | Desmophen 5035 BT ® | 65,0 | 40,5 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 11,1 | 99,3 mmol NCO |

Die Prüfmuster (50 g/m² Polyurethan-Haftklebstoff auf einer 26 µm dicken Polyesterfolie, siehe oben) erzielten eine Klebkraft auf Stahl von 8,2 N/cm. Der Haftklebstoff klebte sehr stark auf Papier, so dass er keineswegs einfach vom Papier abgeschüttelt werden konnte. Weiterhin hinterließ er schon nach kurzer Zeit fettig aussehende Flecken auf dem Papier. Er klebte außerdem stark auf der Haut.

### Vergleichsbeispiel 3

Polyurethan-Zusammensetzung:
NCO / OH - Verhältnis: 1,02
Verhältnis Anzahl Diol-OH / Anzahl Triol-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 35,6 | 166,0 mmol OH |
| | Desmophen 1380 BT ® | 24,6 | 166,0 mmol OH |
| | Bismuttrisneodecanoat | 0,3 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 37,6 | 338,6 mmol NCO |

Die Prüfmuster (50g/m² Polyurethan-Haftklebstoff auf einer 26 µm dicken Polyesterfolie, siehe oben) erzielten eine Klebkraft auf Stahl und auf Kunststoffen von kleiner 0,1 N/cm. Die Klebkraft war zu gering, um leichte Kunststoffteile zu fixieren.

## Patentansprüche

1. Haftklebstoff auf Basis von Polyurethan, **dadurch gekennzeichnet, dass** sich das Polyurethan aus folgenden katalytisch miteinander zur Reaktion gebrachten Ausgangsstoffen in den angegeben Verhältnissen zusammensetzt:
a) mindestens einem aliphatischen oder alicyclischen Polyisocyanat, wobei deren Funktionalität jeweils kleiner oder gleich drei ist,
b) einer Kombination aus mindestens einem Polypropylenglykol-Diol und mindestens einem Polypropylenglykol-Triol,
wobei das Verhältnis der Anzahl der Hydroxylgruppen der Diol-Komponente zu der Anzahl der Hydroxylgruppen der Triol-Komponente kleiner 10 ist, bevorzugt zwischen 0,2 und 5 liegt,
wobei weiterhin das Verhältnis der Anzahl der Isocyanat-Gruppen zur Gesamtanzahl der Hydroxylgruppen zwischen 0,8 und 1,15, bevorzugt zwischen 0,95 und 1,05, besonders bevorzugt zwischen 1,0 und 1,05 liegt,
wobei der Katalysator für die Reaktion zum Polyurethan ein Bismutcarboxylat oder ein Bismutcarboxylat-Derivat ist oder enthält,
und wobei die Diole und Triole alternativ jeweils wie folgt ausgewählt und kombiniert werden:
- Diole mit einem Molekulargewicht von kleiner oder gleich 1000 werden mit Triolen kombiniert, deren Molekulargewicht größer oder gleich 1000, bevorzugt größer oder gleich 3000 ist,
- Diole mit einem Molekulargewicht von größer 1000 werden mit Triolen kombiniert, deren Molekulargewicht kleiner 1000 ist.

2. Haftklebstoff nach Anspruch 1, **dadurch gekennzeichnet, dass** die aliphatischen oder alicyclischen Polyisocyanate Diisocyanate sind, insbesondere solche mit jeweils unsymmetrischer Molekülstruktur.

3. Haftklebstoff nach Anspruch 1 oder 2, **dadurch gekennzeichnet, dass** das Polyisocyanat Butan-1,4-diisocyanat, Tetramethoxybutan-1,4-diisocyanat, Hexan-1,6-diisocyanat, Ethylendiisocyanat, 2,2,4-Trimethyl-hexamethylendiisocyanat, Ethylethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Isocyanatomethyl-3-isocyanato-1,5,5-trimethylcyclohexan (lsophorondiisocyanat), 1 -Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl oder ein chloriertes, bromiertes, schwefel- oder phosphorhaltiges aliphatisches oder alicyclisches Diisocyanat ist und/oder ein Derivat der aufgeführten Diisocyanate, insbesondere dimerisierte oder trimerisierte Typen, ganz besonders bevorzugt lsophorondiisocyanat.

4. Haftklebstoff nach zumindest einem der Ansprüche 1 bis 3, **dadurch gekennzeichnet, dass** zumindest eines der eingesetzten Polypropylenglykole aus einem DMC-katalysierten Herstellprozess hervorgegangen ist.

5. Haftklebstoff nach zumindest einem der Ansprüche 1 bis 4, **dadurch gekennzeichnet, dass** ein Polypropylenglykol-Triol eingesetzt wird, welches DMC-katalysiert hergestellt wurde.

6. Haftklebstoff nach zumindest einem der Ansprüche 1 bis 5, **dadurch gekennzeichnet, dass** Rezeptierungsbestandteile wie Katalysatoren, Alterungsschutzmittel (Antioxidantien), Lichtschutzmittel, UV-Absorber, rheologische Additive sowie sonstige Hilfs- und Zusatzstoffe zugemischt sind.

7. Verfahren zur Herstellung eines Haftklebstoffs nach zumindest einem der vorherigen Ansprüche, wobei
a) in einem Behälter A im wesentlichen die vorgemischte Polypropylenglykol-Kombination (Polyol-Komponente) und in einem Behälter B im wesentlichen die lsocyanat-Komponente vorgelegt werden, wobei gegebenenfalls die weiteren Rezeptierungsbestandteile diesen Komponenten bereits zuvor in einem üblichen Mischverfahren zugemischt wurden,
b) die Polyol- und die Isocyanat-Komponente über Präzisionspumpen durch den Mischkopf oder das Mischrohr einer Mehrkomponenten-Misch- und Dosieranlage gefördert, dort homogen vermischt und somit zur Reaktion gebracht werden,
c) die somit gemischten, miteinander chemisch reagierenden Komponenten unmittelbar danach auf ein bahnförmiges Trägermaterial aufgebracht werden, das sich bevorzugt mit konstanter Geschwindigkeit bewegt,
d) das mit der reagierenden Polyurethanmasse beschichtete Trägermaterial durch einen Wärmekanal geführt wird, in dem die Polyurethanmasse zum Haftklebstoff aushärtet,
e) das beschichtete Trägermaterial abschließend in einer Wickelstation aufgewickelt wird.

8. Verfahren zur Herstellung eines Haftklebstoffs nach zumindest einem der vorherigen Ansprüche, **dadurch gekennzeichnet, dass** die Herstellung ohne Lösemittel erfolgt.

9. Verfahren zur Herstellung eines Haftklebstoffs nach zumindest einem der vorherigen Ansprüche, **dadurch gekennzeichnet, dass** die Herstellung ohne Wasserzusatz erfolgt.

10. Verwendung eines Haftklebstoffs nach zumindest einem der vorherigen Ansprüche zur Herstellung von selbstklebenden Artikeln.

11. Verwendung eines Haftklebstoffs nach zumindest einem der vorherigen Ansprüche zur beschädigungs- und rückstandsfrei wiederablösbaren Befestigung von kleinen Gegenständen mit empfindlichen Oberflächen, zum Beispiel aus polarem Kunststoff, Glas oder Metall, insbesondere in Zeitschriften, Zeitungen, Büchern, Briefen oder generell auf Papieren.

## Claims

1. Polyurethane-based pressure-sensitive adhesive, **characterized in that** the polyurethane is composed of the following starting materials which are reacted catalytically with one another in the stated proportions:
a) at least one aliphatic or alicyclic polyisocyanate having a functionality of in each case less than or equal to three,
b) a combination of at least one polypropylene glycol diol and at least one polypropylene glycol triol,
the ratio of the number of hydroxyl groups in the diol component to the number of hydroxyl groups in the triol component being less than 10, preferably between 0.2 and 5;
additionally the ratio of the number of isocyanate groups to the total number of hydroxyl groups being between 0.8 and 1.15, preferably between 0.95 and 1.05, more preferably between 1.0 and 1.05,
the catalyst for the reaction to the polyurethane consisting of or comprising a bismuth carboxylate or bismuth carboxylate derivative, and
the diols and triols alternatively being selected and combined in each case as follows:
- diols having a molecular weight of less than or equal to 1000 are combined with triols whose molecular weight is greater than or equal to 1000, preferably greater than or equal to 3000,
- diols having a molecular weight of greater than 1000 are combined with triols whose molecular weight is less than 1000.

2. Pressure-sensitive adhesive according to Claim 1, **characterized in that** the aliphatic or alicyclic polyisocyanates are diisocyanates, especially diisocyanates having in each case an asymmetrical molecular structure.

3. Pressure-sensitive adhesive according to Claim 1 or 2, **characterized in that** the polyisocyanate is butane 1,4-diisocyanate, tetramethoxybutane 1,4-diisocyanate, hexane 1,6-diisocyanate, ethylene diisocyanate, 2,2,4-trimethylhexamethylene diisocyanate, ethylethylene diisocyanate, dicyclohexylmethane diisocyanate, 1,4-diisocyanatocyclohexane, 1,3-diisocyanatocyclohexane, 1,2-diisocyanatocyclohexane, 1,3-diisocyanatocyclopentane, 1,2-diisocyanatocyclopentane, 1,2-diisocyanatocyclobutane, 1-isocyanatomethyl-3-isocyanato-1,5,5-trimethylcyclohexane (isophorone diisocyanate), 1-methyl-2,4-diisocyanato-cyclohexane, 1,6-diisocyanato-2,2,4-trimethylhexane, 1,6-diisocyanato-2,4,4-trimethylhexane, 5-isocyanato-1-(2-isocyanatoeth-1-yl)-1,3,3-trimethylcyclohexane, 5-isocyanato-1-(3-isocyanatoprop-1-yl)-1,3,3-trimethylcyclohexane, 5-isocyanato-1-(4-isocyanatobut-1-yl)-1,3,3-trimethylcyclohexane, 1-isocyanato-2-(3-isocyanatoprop-1-yl)cyclohexane, 1-isocyanato-2-(2-isocyanatoeth-1-yl)cyclohexane, 2-heptyl-3,4-bis(9-isocyanatononyl)-1-pentylcyclohexane, norbornane diisocyanatomethyl or a chlorinated, brominated, sulphur-containing or phosphorus-containing aliphatic or alicyclic diisocyanate and/or a derivative of the diisocyanates listed, especially dimerized or trimerized types, very preferably isophorone diisocyanate.

4. Pressure-sensitive adhesive according to at least one of Claims 1 to 3, **characterized in that** at least one of the polypropylene glycols used has originated from a DMC catalyzed preparation process.

5. Pressure-sensitive adhesive according to at least one of Claims 1 to 4, **characterized in that** a polypropylene glycol triol is used which has been prepared by DMC catalysis.

6. Pressure-sensitive adhesive according to at least one of Claims 1 to 5, **characterized in that** formulating ingredients such as catalysts, ageing inhibitors (antioxidants), light stabilizers, UV absorbers, rheological additives, and other auxiliaries and additives have been mixed in.

7. Process for preparing a pressure-sensitive adhesive according to at least one of the preceding claims, where
a) a vessel A is charged substantially with the premixed polypropylene glycol combination (polyol component) and a vessel B is charged substantially with the isocyanate component, it being possible for the other formulating ingredients to have been mixed into these components beforehand in a standard mixing procedure,
b) the polyol component and the isocyanate component are conveyed via precision pumps through the mixing head or mixing tube of a multi-component mixing and metering unit, where they are homogenously mixed and so brought to reaction,
c) the chemically inter-reacting components mixed in this way are applied immediately thereafter to a sheet-like backing material which is preferably moving at constant speed,
d) the backing material coated with the reactive polyurethane composition is passed through a heating tunnel in which the polyurethane composition cures to the pressure-sensitive adhesive,
e) finally the coated backing material is wound up in a winding station.

8. Process for preparing a pressure-sensitive adhesive according to at least one of the preceding claims, **characterized in that** the preparation takes place without solvent.

9. Process for preparing a pressure-sensitive adhesive according to at least one of the preceding claims, **characterized in that** the preparation takes place without addition of water.

10. Use of a pressure-sensitive adhesive according to at least one of the preceding claims for producing self-adhesive articles.

11. Use of a pressure-sensitive adhesive according to at least one of the preceding claims for the redetachable fastening without damage or residue of small articles having sensitive surfaces, made for example from polar plastic, glass or metal, particularly in magazines, newspapers, books, letters or to papers in general.

## Revendications

1. Autoadhésif à base de polyuréthanne, **caractérisé en ce que** le polyuréthanne est composé des substances de départ ci-après, que l'on fait réagir ensemble par voie catalytique dans les proportions indiquées :
a) au moins un polyisocyanate aliphatique ou alicyclique, dont la fonctionnalité est à chaque fois plus petite ou égale à trois,
b) une combinaison d'au moins un diol de polypropylèneglycol et d'au moins un triol de polypropylèneglycol,
où le rapport du nombre des groupes hydroxyle du composant diol au nombre des groupes hydroxyle du composant triol est inférieur à 10, et se situe de préférence entre 0,2 et 5,
où en outre le rapport du nombre des groupes isocyanate au nombre total des groupes hydroxyle se situe entre 0,8 et 1,15, de préférence entre 0,95 et 1,05, plus préférentiellement entre 1,0 et 1,05,
où le catalyseur pour la réaction de formation du polyuréthanne est ou contient un carboxylate de bismuth ou un dérivé de carboxylate de bismuth,
et où les diols et les triols sont alternativement à chaque fois choisis et combinés comme suit :
- des diols d'un poids moléculaire inférieur ou égal à 1000 sont combinés avec des triols d'un poids moléculaire supérieur ou égal à 1000, de préférence supérieur ou égal à 3000,
- des diols d'un poids moléculaire supérieur à 1000 sont combinés avec des triols d'un poids moléculaire inférieur à 1000.

2. Autoadhésif selon la revendication 1, **caractérisé en ce que** les polyisocyanates aliphatiques ou alicycliques sont des diisocyanates, en particulier ceux ayant à chaque fois une structure moléculaire asymétrique.

3. Autoadhésif selon la revendication 1 ou 2, **caractérisé en ce que** le polyisocyanate est du butane-1,4-diisocyanate, du 1,4-diisocyanate de tétraméthoxybutane, du 1,6-diisocyanate d'hexane, du diisocyanate d'éthylène, du diisocyanate de 2,2,4-triméthyl-hexaméthylène, du diisocyanate d'éthyléthylène, du diisocyanate de dicyclohexylméthane, du 1,4-diisocyanatocyclohexane, du 1,3-diisocyanato-cyclohexane, du 1,2-diisocyanatocyclohexane, du 1,3-diisocyanatocyclopentane, du 1,2-diisocyanato-cyclopentane, du 1,2-diisocyanatocyclobutane, du 1-isocyanatométhyl-3-isocyanato-1,5,5-triméthyl-cyclohexane (diisocyanate d'isophorone), du 1-méthyl-2,4-diisocyanato-cyclohexane, du 1,6-diisocyanato-2,2,4-triméthylhexàne, du 1,6-diisocyanato-2,4,4-triméthylhexane, du 5-isocyanato-1-(2-isocyanatoéth-1-yl}-1,3,3-triméthylcyclohexane, du 5-isocyanato-1-(3-isocyanatoprop-1-yl)-1,3,3-triméthylcyclohexane, du 5-isocyanato-1-(4-isocyanatobut-1-yl)-1,3,3-triméthyl-cyclohexane, du 1-isocyanato-2-(3-isocyanatoprop-1-yl)-cyclohexane, du 1-isocyanato-2-(2-isocyanatoéth-1-yl)-cyclohexane, du 2-heptyl-3,4-bis(9-isocyanatononyl)-1-pentylcyclohexane, du norbonane-diisocyanatométhyle, ou un diisocyanate aliphatique ou alicyclique contenant du chlore, du brome, du soufre ou du phosphore, et/ou un dérivé des diisocyanates mentionnés, en particulier des types dimérisés ou trimérisés, plus préférentiellement du diisocyanate d'isophorone.

4. Autoadhésif selon au moins l'une quelconque des revendications 1 à 3, **caractérisé en ce qu'**au moins l'un des polyéthylène glycol mis en oeuvre provient d'un procédé de préparation à catalyse DMC.

5. Autoadhésif selon au moins l'une quelconque des revendications 1 à 4, **caractérisé en ce que** l'on met en oeuvre un polypropylèneglycol triol préparé par catalyse DMC.

6. Autoadhésif selon au moins l'une quelconque des revendications 1 à 5, **caractérisé en ce que** l'on ajoute des constituants de formulation tels que des catalyseurs, des agents de protection contre le vieillissement (antioxydants), des photoprotecteurs, des absorbeurs d'UV, des additifs de rhéologie ainsi que d'autres adjuvants et additifs.

7. Procédé de préparation d'un autoadhésif selon au moins l'une quelconque des revendications qui précèdent, dans lequel
a) dans un récipient A, on charge essentiellement la combinaison de polypropylèneglycol prémélangée (composant polyol) et, dans un récipient B, essentiellement le composant isocyanate, les autres constituants de la formulation pouvant, le cas échéant, être déjà ajoutés au préalable à ces composants dans un processus de mélange usuel,
b) les composants polyol et isocyanate sont transportés via des pompes de précision dans la tête de mélange ou le tube de mélange d'une installation de mélange multicomposant et de dosage, y sont mélangés de manière homogène et mis ainsi en réaction,
c) les composants ainsi mélangés, et qui réagissent chimiquement ensemble, sont immédiatement ensuite appliqués sur un matériau de support en forme de bande, qui se déplace de préférence à vitesse constante,
d) le matériau de support revêtu de la masse réactive de polyuréthanne est envoyé dans un canal chauffant, dans lequel la masse de polyuréthanne durcit pour donner un autoadhésif,
e) le matériau de support revêtu est ensuite enroulé dans un poste de bobinage.

8. Procédé de préparation d'un autoadhésif selon au moins l'une quelconque des revendications qui précèdent, **caractérisé en ce que** la préparation est entreprise sans solvant.

9. Utilisation d'un autoadhésif selon au moins l'une quelconque des revendications qui précèdent, **caractérisée en ce que** la préparation est entreprise sans addition d'eau.

10. Utilisation d'un autoadhésif selon au moins l'une quelconque des revendications qui précèdent pour la préparation d'articles autocollants.

11. Utilisation d'un autoadhésif selon au moins l'une quelconque des revendications qui précèdent pour une fixation détachable sans endommagement et sans résidus de petits objets à surfaces sensibles, par exemple en matière plastique polaire, en verre ou en métal, en particulier dans des périodiques, des journaux, des livres, des lettres ou de manière générale sur des papiers.
